(19) Europäisches Patentamt
European Patent Office
Office européen des brevets

(11) EP 2 903 075 A1

(12) **EUROPEAN PATENT APPLICATION**
published in accordance with Art. 153(4) EPC

(43) Date of publication:
**05.08.2015 Bulletin 2015/32**

(21) Application number: **13841887.6**

(22) Date of filing: **25.09.2013**

(51) Int Cl.:
***H01M 10/0569*** (2010.01) ***H01G 9/035*** (2006.01)
***H01M 10/052*** (2010.01) ***H01M 10/0567*** (2010.01)

(86) International application number:
**PCT/JP2013/075884**

(87) International publication number:
**WO 2014/050877 (03.04.2014 Gazette 2014/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.09.2012 JP 2012218675**

(71) Applicant: **Daikin Industries, Ltd.**
**Osaka-shi, Osaka 530-8323 (JP)**

(72) Inventors:
- **SAKATA Hideo**
**Kita-ku, Osaka-shi**
**Osaka 530-8323 (JP)**
- **YAMAZAKI, Shigeaki**
**Kita-ku, Osaka-shi**
**Osaka 530-8323 (JP)**
- **YAMAUCHI, Akiyoshi**
**Kita-ku, Osaka-shi**
**Osaka 530-8323 (JP)**
- **KAGAWA, Michiru**
**Kita-ku, Osaka-shi**
**Osaka 530-8323 (JP)**
- **NAKAZONO, Aoi**
**Kita-ku, Osaka-shi**
**Osaka 530-8323 (JP)**
- **KOH, Meiten**
**Kita-ku**
**Osaka-shi**
**Osaka 530-8323 (JP)**

(74) Representative: **Hoffmann Eitle**
**Patent- und Rechtsanwälte PartmbB**
**Arabellastraße 30**
**81925 München (DE)**

(54) **NONAQUEOUS ELECTROLYTE SOLUTION, ELECTROCHEMICAL DEVICE, LITHIUM ION SECONDARY CELL, AND MODULE**

(57) The present invention aims to provide a nonaqueous electrolyte solution which enables production of a lithium ion secondary cell excellent in high temperature storage characteristics and cycling characteristics at high voltages. The present invention relates to a nonaqueous electrolyte solution including:
a nonaqueous solvent; and
an electrolyte salt;
wherein the nonaqueous solvent contains
a fluorinated linear carbonate (A) represented by Formula (1):

RfOCOOR (1)

where Rf represents a C1-4 fluorinated alkyl group and R represents a C1-4 alkyl group, and
at least one cyclic carbonate (B) selected from the group consisting of ethylene carbonate, propylene carbonate, and fluoroethylene carbonate, and
the nonaqueous solvent also contains
at least one compound ($\alpha$) selected from the group consisting of
(I) a compound represented by Formula (2):

RfOH (2)

where Rf is defined as above,

EP 2 903 075 A1

(II) a compound represented by Formula (3)

$$ROH \qquad (3)$$

where R is defined as above, and
(III) a compound represented by Formula (4):

$$ROCOCl \qquad (4)$$

where R is defined as above, and

at least one compound (β) selected from the group consisting of
(IV) a compound represented by Formula (5):

$$HO(CH_2CH_2)_nOH \qquad (5)$$

where n is an integer of 1 to 5,
(V) a compound represented by Formula (6):

$$HO(CHCH_3CH_2)_nOH \qquad (6)$$

where n is an integer of 1 to 5, and
(VI) a compound represented by Formula (7):

$$HO(CHFCH_2)_nOH \qquad (7)$$

where n is an integer of 1 to 5,
the compound (α) being contained in an amount of 5000 ppm or less based on the amount of the fluorinated linear carbonate (A),
the compound (β) being contained in an amount of 50 ppm or less based on the amount of the cyclic carbonate (B).

## Description

### TECHNICAL FIELD

The present invention relates to a nonaqueous electrolyte solution containing a nonaqueous solvent in which the amount of a specific compound is reduced and an electrolyte salt. The present invention also relates to an electrochemical device, a lithium ion secondary cell, and a module each including the nonaqueous electrolyte solution.

### BACKGROUND ART

Commonly used nonaqueous electrolyte solutions for electrochemical devices such as lithium ion secondary cells are electrolyte solutions containing an electrolyte salt (e.g., $LiPF_6$, $LiBF_4$) dissolved in a nonaqueous solvent (e.g., ethylene carbonate, propylene carbonate, dimethyl carbonate). Such hydrocarbon solvents, however, have a low oxidation potential, and therefore the electrolyte solution may be decomposed in high voltage cells to be produced in the future.

Patent Literature 1 discloses that a nonaqueous electrolyte secondary cell including a fluorinated linear carbonate suppresses gassing caused by electrodialysis and is highly safe. Patent Literature 1, however, does not mention about impurities of the compound. In addition, such a nonaqueous electrolyte secondary cell may have its discharge capacity lowered when left in a high-temperature environment or after repetitive charge-discharge cycles.

### CITATION LIST

#### Patent Literature

Patent Literature 1: JP-A H11-195429

### SUMMARY OF INVENTION

#### Technical Problem

The present invention aims to provide a nonaqueous electrolyte solution which enables production of a lithium ion secondary cell and the like excellent in high temperature storage characteristics and cycling characteristics at high voltages.

#### Solution to problem

The present inventors made various investigations to solve the above problem, and found that use of a nonaqueous solvent in which the amount of specific impurities is reduced can solve the problem, thereby completing the present invention.

Specifically, the present invention provides a nonaqueous electrolyte solution including:

a nonaqueous solvent; and
an electrolyte salt;
wherein the nonaqueous solvent contains
a fluorinated linear carbonate (A) represented by Formula (1):

RfOCOOR (1)

where Rf represents a C1-4 fluorinated alkyl group and R represents a C1-4 alkyl group, and
at least one cyclic carbonate (B) selected from the group consisting of ethylene carbonate, propylene carbonate, and fluoroethylene carbonate, and
the nonaqueous solvent also contains
at least one compound ($\alpha$) selected from the group consisting of

(I) a compound represented by Formula (2):

RfOH (2)

where Rf is defined as above,
(II) a compound represented by Formula (3):

$$ROH \quad (3)$$

where R is defined as above, and
(III) a compound represented by Formula (4):

$$ROCOCl \quad (4)$$

where R is defined as above, and

at least one compound (β) selected from the group consisting of

(IV) a compound represented by Formula (5):

$$HO(CH_2CH_2)_nOH \quad (5)$$

where n is an integer of 1 to 5,
(V) a compound represented by Formula (6):

$$HO\ (CHCH_3CH_2)_nOH \quad (6)$$

where n is an integer of 1 to 5, and
(VI) a compound represented by Formula (7):

$$HO(CHFCH_2)_nOH \quad (7)$$

where n is an integer of 1 to 5,

the compound (α) being contained in an amount of 5000 ppm or less based on the amount of the fluorinated linear carbonate (A),
the compound (β) being contained in an amount of 50 ppm or less based on the amount of the cyclic carbonate (B).

The fluorinated linear carbonate (A) is preferably $CF_3CH_2OCOOCH_3$ or $CF_3CH_2OCOOCH_2CH_3$.

The amount of the fluorinated linear carbonate (A) is preferably 0.5 to 90% by weight in the nonaqueous solvent.

Preferably, the cyclic carbonate (B) is ethylene carbonate and the compound (β) is the compound represented by Formula (5).

Preferably, the cyclic carbonate (B) is propylene carbonate and the compound (β) is the compound represented by Formula (6).

Preferably, the cyclic carbonate (B) is fluoroethylene carbonate and the compound (p) is the compound represented by Formula (7).

The present invention also provides an electrochemical device including the nonaqueous electrolyte solution described above.

The present invention also provides a lithium ion secondary cell including a positive electrode, a negative electrode, and the nonaqueous electrolyte solution described above.

The present invention also provides a module including the lithium ion secondary cell described above.

- Advantageous Effects of Invention

The present invention can provide a nonaqueous electrolyte solution that enables production of a lithium ion secondary cell and the like excellent in high temperature storage characteristics and cycling characteristics at high temperatures.

The nonaqueous electrolyte solution of the present invention is a nonaqueous electrolyte solution including:

a nonaqueous solvent; and
an electrolyte salt;
wherein the nonaqueous solvent contains

a fluorinated linear carbonate (A) represented by Formula (1):

RfOCOOR (1)

where Rf represents a C1-4 fluorinated alkyl group and R represents a C1-4 alkyl group, and
at least one cyclic carbonate (B) selected from the group consisting of ethylene carbonate, propylene carbonate, and fluoroethylene carbonate, and
the nonaqueous solvent also contains
at least one compound ($\alpha$) selected from the group consisting of

(I) a compound represented by Formula (2):

RfOH (2)

where Rf is defined as above,
(II) a compound represented by Formula (3):

ROH (3)

where R is defined as above, and
(III) a compound represented by Formula (4):

ROCOCl (4)

where R is defined as above, and

at least one compound ($\beta$) selected from the group consisting of

(IV) a compound represented by Formula (5):

$HO(CH_2CH_2)_nOH$ (5)

where n is an integer of 1 to 5,
(V) a compound represented by Formula (6):

$HO\ (CHCH_3CH_2)_nOH$ (6)

where n is an integer of 1 to 5, and
(VI) a compound represented by Formula (7):

$HO\ (CHFCH_2)_nOH$ (7)

where n is an integer of 1 to 5,

the compound ($\alpha$) being contained in an amount of 5000 ppm or less based on the amount of the fluorinated linear carbonate (A),
the compound ($\beta$) being contained in an amount of 50 ppm or less based on the amount of the cyclic carbonate (B).

The use of the electrolyte solution of the present invention enables production of an electrochemical device with a high capacity excellent in storage characteristics, load characteristics, and cycling characteristics.

In the present invention, the "fluorinated alkyl group" refers to a group in which at least one hydrogen atom of an alkyl group is substituted with a fluorine atom.

Hereinafter, the compounds represented by Formulae (2) to (7) may also be referred to as a compound (I), a compound (II), a compound (III), a compound (IV), a compound (V), and a compound (VI) in sequence.

The nonaqueous solvent contains a fluorinated linear carbonate (A) represented by Formula (1).

Examples of the Rf include $CF_3$-, $CF_3CF_2$-, $(CF_3)_2CH$-, $CF_3CH_2$-, $C_2F_5CH_2$-, $HCF_2CF_2CH_2$-, and $CF_3CFHCF_2CH_2$-. In particular, $CF_3CH_2$- is preferable because it has high flame retardance, and excellent rate characteristics and oxidation resistance.

Examples of the R include $-CH_3$, $-CH_2CH_3$, $-CH(CH_3)_2$, and $-C_3H_7$. In particular, $-CH_3$ and $-CH_2CH_3$ are preferable because of their low viscosity and excellent rate characteristics.

Specific examples of the fluorinated linear carbonate (A) include $CF_3CH_2OCOOCH_3$, $CF_3CH_20COOCH_2CH_3$, $CF_3CF_2CH_2OCOOCH_3$, and $CF_3CF_2CH_2OCOOCH_2CH_3$- In particular, $CF_3CH_2OCOOCH_3$ and $CF_3CH_2OCOOCH_2CH_3$ are preferable.

The amount of the fluorinated linear carbonate (A) is preferably 0.5 to 90% by weight in the nonaqueous solvent. When the amount of the fluorinated linear carbonate (A) is large, the discharge capacity tends to be reduced. The allowable upper limit of the amount is 90% by weight. The fluorinated linear carbonate (A) is allowed to exert its effect by use in a comparatively small amount. The upper limit of the amount is more preferably 70% by weight. The effective lower limit of the amount is more preferably 10% by weight, and still more preferably 20% by weight.

The nonaqueous solvent further contains at least one compound ($\alpha$) selected from the group consisting of the compound (I), the compound (II), and the compound (III).

The fluorinated linear carbonate (A) is commonly synthesized by a reaction between the compound (I) and the compound (III). Accordingly, the compounds (I) and (III) which are starting materials may be left as impurities depending on a purification method. In addition, in synthesis of the fluorinated linear carbonate represented by Formula (1), the compound (II) may also be produced as impurities. Since the compounds (I) to (III) are impurities produced by synthesis of the fluorinated linear carbonate represented by Formula (1), the Rf in Formula (1) and the Rf in Formula (2) are the same, and the R in Formula (1) and the R in each of Formulae (3) and (4) are the same.

Detailed description is given on $CF_3CH_2OCOOCH_3$ and $CF_3CH_2OCOOCH_2CH_3$ which are specific preferable examples of the fluorinated linear carbonate (A).

$CF_3CH_2OCOOCH_3$ is commonly synthesized by a reaction between $CF_3CH_2OH$ and $CH_3OCOCl$. Accordingly, $CF_3CH_2OH$ (compound (I-1)) and $CH_3OCOCl$ (compound (III-1)) may be left as impurities. Moreover, $CH_3OH$ (compound (II-1)) may be produced as impurities.

$CF_3CH_2OCOOCH_2CH_3$ is commonly synthesized by a reaction between $CF_3CH_2OH$ and $CH_3CH_2OCOCl$. Accordingly, $CF_3CH_2OH$ (compound (I-1)) and $CH_3CH_2OCOCl$ (compound (III-2)) may be left as impurities. Moreover, $CH_3CH_2OH$ (compound (II-2)) may be produced as impurities.

In the nonaqueous electrolyte solution of the present invention, the amount of the compound ($\alpha$) (i.e., compounds (I) to (III)) is not more than 5000 ppm, preferably not more than 3500 ppm, and still more preferably not more than 2500 ppm based on the amount of the fluorinated linear carbonate (A). The amount is further more preferably 1000 ppm or less, particularly preferably 100 ppm or less, and most preferably 10 ppm or less. If the total amount of the compounds (I) to (III) is larger than 5000 ppm, discharge characteristics tend to be lowered more significantly after storage at high temperatures. Especially, in the case where alcohols derived from the compounds (I) and (II) are left, the alcohols easily react with Li to lower the capacity. Additionally, the compound (III) easily reacts with moisture to produce HCl in the cell, causing rust on the package.

Since the HOMO energies of the compounds (I) to (III) obtained by molecular activation calculation are each higher than that of the fluorinated linear carbonate (A), oxidation resistance thereof is poor. Accordingly, such compounds may be decomposed in high voltage cells, being a cause of deterioration. Based on the above fact, it is presumable that as the total amount of the compounds (I) to (III) in the nonaqueous solvent is smaller, the degradation in storage characteristics of cells is smaller.

As described above, the compound ($\alpha$) (i.e., the compounds (I) to (III)) is an impurity contained in the fluorinated linear carbonate (A). Accordingly, purification of the fluorinated linear carbonate (A) in advance can adjust the amount of the compound ($\alpha$) (total amount of the compounds (I) to (III)) in the nonaqueous solvent within the above range (i.e., not more than 5000 ppm based on the amount of the fluorinated linear carbonate (A)). Here, ppm is based on the weight, and the state "not more than 5000 ppm based on the amount of the fluorinated linear carbonate (A)" indicates a state that the amount is not more than 0.5 parts by weight relative to 100 parts by weight of the fluorinated linear carbonate (A).

Exemplary methods for purifying the fluorinated linear carbonate (A) include rectification using a distillation column with 10 or more theoretical plates.

The fluorinated linear carbonate (A) may be distilled under reduced pressure.

In purification of the fluorinated linear carbonate (A), distillation at high temperatures produces byproducts. For example, in the case where the fluorinated linear carbonate (A) is $CF_3CH_2OCO_2CH_3$, the following reaction is carried out and a by-product is produced.

$$CF_3CH_2OCO_2CH_3 \rightarrow CF_3CH_2OCO_2CH_2CF_3 + CH_3OCO_2CH_3$$

Distillation of the fluorinated linear carbonate (A) under reduced pressure enables distillation at low temperatures, which suppresses production of such byproducts.

In this case, distillation is performed at a temperature of preferably not higher than 90°C, and more preferably not higher than 70°C.

The nonaqueous solvent contains at least one cyclic carbonate (B) selected from the group consisting of ethylene carbonate, propylene carbonate, and fluoroethylene carbonate.

The amount of the cyclic carbonate (B) is preferably 5 to 80% by weight in the nonaqueous solvent. If the amount of the cyclic carbonate (B) is less than 5% by weight, the safety is hardly improved and high voltage cells are hardly achieved. If the amount is more than 80% by weight, the electrolyte solution tends to be separated into two layers or the viscosity thereof tends to become excessively high to lower the load characteristics at low temperatures. The lower limit of the amount is more preferably 10% by weight. The upper limit of the amount is more preferably 50% by weight, still more preferably 40% by weight, and particularly preferably 30% by weight.

The nonaqueous solvent further contains at least one compound (β) selected from the group consisting of the compound (IV), the compound (V), and the compound (VI).

The compound (β) is a by-product generated in synthesis of the cyclic carbonate (B).

More specifically, the compound (IV) is a by-product generated in synthesis of ethylene carbonate, the compound (V) is a by-product generated in synthesis of propylene carbonate, and the compound (VI) is a by-product generated in synthesis of fluoroethylene carbonate.

In the electrolyte solution of the present invention, preferably, the cyclic carbonate (B) is ethylene carbonate and the compound (β) is the compound (IV) represented by Formula (5).

Preferably, the cyclic carbonate (B) is propylene carbonate and the compound (β) is the compound (V) represented by Formula (6).

Preferably, the cyclic carbonate (B) is fluoroethylene carbonate and the compound (β) is the compound (VI) represented by Formula (7).

In the case of containing two or more cyclic carbonates (B), the nonaqueous solvent may contain two or more compounds (β).

As above, the compound (β) is an impurity of the cyclic carbonate (B). The cyclic carbonate (B) is therefore preferably purified in advance. Purification in advance can adjust the amount of the compound (β) (i.e., the compound (IV), the compound (V), the compound (VI)) as an impurity, setting the amount of the compound (β) within the range described later.

The cyclic carbonate (B) may be purified by any method, and a known method, such as rectification using a distillation column with 10 or more theoretical plates, may be employed.

In the nonaqueous electrolyte solution of the present invention, the amount of the compound (β) (i.e., total amount of the compound (IV), the compound (V), and the compound (VI)) is 50 ppm or less based on the amount of the cyclic carbonate (B). Accordingly, the nonaqueous electrolyte solution of the present invention is excellent in high temperature storage characteristics and cycling characteristics at high voltages.

If the amount of the compound (β) is more than 50 ppm, discharge characteristics tends to be significantly lowered after storage at high temperatures. Here, the state where "the amount of 50 ppm or less" indicates a state that the amount is 0.005 parts by mass or less relative to 100 parts by mass of the cyclic carbonate (B).

The amount of the compound (β) is preferably 30 ppm or less and more preferably 20 ppm or less relative to the amount of the cyclic carbonate (B).

Preferably, the amounts of the compound (IV), the compound (V), and the compound (VI) are based on the amounts of ethylene carbonate, propylene carbonate, and fluoroethylene carbonate, respectively.

The nonaqueous solvent may contain other components.

Other components of the nonaqueous solvent may be any known solvents for nonaqueous electrolyte secondary cells. Examples thereof include: alkylene carbonates such as butylene carbonate and 4,5-difluoroethylene carbonate; dialkyl carbonates (preferably having C1-4 alkyl groups) such as dimethyl carbonate, diethyl carbonate, di-n-propyl carbonate, and ethyl methyl carbonate; cyclic ethers such as tetrahydrofuran and 2-methyl tetrahydrofuran; linear ethers such as dimethoxyethane and dimethoxymethane; cyclic carboxylic acid ester compounds such as γ-butyrolactone and γ-valerolactone; and linear carboxylic acid esters such as methyl acetate, methyl propionate, and ethyl propionate. Two or more of these may be used in combination. In particular, the nonaqueous solvent preferably contains dialkyl carbonate.

Examples of the dialkyl carbonate having a C1-4 alkyl group include dimethyl carbonate, diethyl carbonate, di-n-propyl carbonate, ethyl methyl carbonate, methyl-n-propyl carbonate, and ethyl-n-propyl carbonate. In particular, dimethyl carbonate, diethyl carbonate, or ethyl methyl carbonate is preferable.

Other examples of a preferable nonaqueous solvent further include those containing a phosphorous organic solvent. Examples of the phosphorous organic solvent include trimethyl phosphate, triethyl phosphate, dimethyl ethyl phosphate, methyl diethyl phosphate, ethylene methyl phosphate, and ethylene ethyl phosphate. A nonaqueous solvent containing not less than 10% by volume of a phosphorous organic solvent can lower the combustibility of a resulting

electrolyte solution. Especially, an electrolyte solution preferably contains a nonaqueous solvent including 10 to 80% by volume of a phosphorous organic solvent and other components mainly including nonaqueous solvents selected from γ-butyrolactone, γ-valerolactone, alkylene carbonate, and dialkyl carbonate, and a lithium salt dissolved therein. In such a case, a balance between cycling characteristics and high-current discharge characteristics is improved.

Preferably, the nonaqueous solvent contains a cyclic carbonate having a carbon-carbon unsaturated bond in a molecule in an amount of preferably not more than 8% by weight and more preferably 0.01 to 8% by weight. The cyclic carbonate in the nonaqueous solvent in an amount within the above range is preferable because it suppresses a secondary reaction of the fluorinated linear carbonate (A) at the negative electrode, thereby further improving the storage characteristics and cycling characteristics. If the amount of the cyclic carbonate is more than 8% by weight, cell characteristics may be lowered after storage. Still more preferably, the lower limit of the amount is 0.1% by weight and the upper limit is 3% by weight.

Examples of the cyclic carbonate having a carbon-carbon unsaturated bond in a molecule include: vinylenecarbonate compounds such as vinylenecarbonate, methylvinylenecarbonate, ethylvinylenecarbonate, 4,5-dimethylvinylenecarbonate, 4,5-diethylvinylenecarbonate, fluorovinylenecarbonate, and trifluoromethylvinylenecarbonate; and vinyl ethylene carbonate compounds such as 4-vinylethylene carbonate, 4-methyl-4-vinylethylene carbonate, 4-ethyl-4-vinylethylene carbonate, 4-n-propyl-4-vinylene ethylene carbonate, 5-methyl-4-vinylethylene carbonate, 4,4-divinylethylene carbonate, 4,5-divinylethylene carbonate, 4,4-dimethyl-5-methylene ethylene carbonate, and 4,4-diethyl-5-methylene ethylene carbonate. Among these, preferred are vinylenecarbonate, 4-vinylethylene carbonate, 4-methyl-4-vinylethylene carbonate, and 4,5-divinylethylene carbonate, and particularly preferred are vinylenecarbonate and 4-vinylethylene carbonate. Two or more of these may be used in combination.

The nonaqueous solvent of the present invention may further contain a fluorine-containing ether represented by Formula (8):

$$Rf^1\text{-O-}Rf^2 \qquad (8)$$

(wherein, the $Rf^1$ and the $Rf^2$ are the same as or different from each other, and each represent a C1-10 alkyl group or a C1-10 fluorinated alkyl group; at least one of them should be a fluorinated alkyl group).

The contained fluorine-containing ether enables production of a cell further excellent in oxidation resistance and safety.

Here, the nonaqueous solvent preferably contains compounds of (I') and (II') that are impurities of the fluorine-containing ether in the total amount of not more than 5000 ppm relative to the amount of the fluorine-containing ether:

(I') a fluorine-containing unsaturated compound (hereinafter, also referred to as a compound (I')); and

(II') a hydroxy group-containing compound (hereinafter, also referred to as a compound (II')) represented by Formula (9):

$$Rf^1OH \qquad (9)$$

(wherein $Rf^1$ is defined as above).

Specific examples of the fluorine-containing ether represented by Formula (8) include $HCF_2CF_2CH_2OCF_2CF_2H$, $CF_3CF_2CH_2OCF_2CF_2H$ $HCF_2CF_2CH_2OCF_2CFHCF_3$, $CF_3CF_2CH_2OCF_2CFHCF_3$, $C_6F_{13}OCH$ $C_6F_{13}OC_2H_5$, $C_8F_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH(C_2H_5)_2$, and $HCF_2CF_2OCH_2CH(CH_3)_2$. Among these, in terms of oxidation resistance and compatibility with an electrolyte salt such as $LiPF_6$, at least one compound selected from the group consisting of $HCF_2CF_2CH_2OF_2CF_2H$ and $HCF_2CF_2CH_2OCF_2CFHCF_3$ is preferable, and $HCF_2CF_2CH_2OCF_2CF_2H$ is more preferable.

The amount of the fluorine-containing ether represented by Formula (8) in the nonaqueous solvent is preferably not more than 40% by weight or less, and more preferably in a range of 3 to 40% by weight.

The fluorine-containing unsaturated compound (I') is derived from a by-product produced in synthesis of the fluorine-containing ether represented by Formula (8). Specifically, it is produced such that hydrogen fluoride (HF) is eliminated from the fluorine-containing ether represented by Formula (8) and an unsaturated bond is formed therein. More specifically, examples thereof include: (I'-1) $CF_2{=}CFCH_2OCF_2CF_2H$; (I'-2) $HCF_2CF{=}CHOCF_2CF_2H$; (I'-3) $CF_2{=}CFCH_2OCF_2CFHCF_3$; (I'-4) $HCF_2CF_2CH_2OCF{=}CFCF_3$; (I'-5) $HCF_2CF_2CH_2OCF_2CF{=}CF_2$; and (I'-6) $HCF_2CF{=}CHOCF_2CFHCF_3$.

The hydroxy group-containing compound (II') is derived from a starting material used in synthesis of the fluorine-containing ether represented by Formula (8), and is represented by Formula (9):

$$Rf^1OH \qquad (9).$$

Here, $Rf^1$ may be the same as that in Formula (8). Specific examples thereof include (II'-1) $HCF_2CF_2CH_2OH$.

A specific preferable combination is

a combination including the fluorine-containing ether represented by Formula (8) that is $HCF_2CF_2CH_2OCF_2CF_2H$, the fluorine-containing unsaturated compound (I') that includes (I'-1) $CF_2=CFCH_2OCF_2CF_2H$ and (I'-2) $HCF_2CF=CHOCF_2CF_2H$, and the hydroxy group-containing compound (II') that is (II'-1) $HCF_2CF_2CH_2OH$, or

a combination including the fluorine-containing ether represented by Formula (8) that is $HCF_2CF_2CH_2OCF_2CFHCF_3$, the fluorine-containing unsaturated compound (I') that includes (I'-3) $CF_2=CFCH_2OCF_2CFHCF_3$, (I'-4) $HCF_2CF_2CH_2OCF=CFCF_3$, (I'-5) $HCF_2CF_2CH_2OCF_2CF=CF_2$, and (I'-6) $HCF_2CF=CHOCF_2CFHCF_3$, and the hydroxy group-containing compound (II') that is (II'-1) $HCF_2CF_2CH_2OH$.

The compounds (I') and (II') are impurities contained in fluorine-containing ethers. Accordingly, in the case where the fluorine-containing ether represented by Formula (8) is used, the amount of the compounds (I') and (II') in the nonaqueous solvent is adjusted to fall within the above range (not more than 5000 ppm in total relative to the amount of the fluorine-containing ether) by purifying the fluorine-containing ether before its use. Here, ppm is based on the weight and the state "not more than 5000 ppm relative to the amount of the fluorine-containing ether" indicates a state that the amount is not more than 0.5 parts by weight relative to 100 parts by weight of the fluorine-containing ether.

The upper limit of the total amount of the compounds (I') and (II') is preferably not more than 3500 ppm and more preferably not more than 2000 ppm relative to the amount of the fluorine-containing ether. If the total amount of the compounds (I') and (II') is larger than 5000 ppm, discharge characteristics tends to be lowered after storage under high temperatures and cyclic degradation when the voltage is high tends to be greater. Especially, when $Rf^1$-OH (compound (II')) out of the compounds (I') and (II') is left, it easily reacts with Li to lower the capacity. Since the fluorine-containing unsaturated compound (I') has a double bond, when the left amount thereof is large, it tends to easily react with moisture and the like in the electrolyte solution to be decomposed.

The nonaqueous solvent may optionally contain other useful compounds such as conventionally known additives, dehydrating agents, deoxidizers, and overcharge inhibitors.

Examples of the additives include: carbonate compounds such as fluoroethylene carbonate, trifluoropropylene carbonate, phenyl ethylene carbonate, and erythritane carbonate; carboxylic acid anhydrides such as succinic anhydride, glutaric anhydride, maleic anhydride, citraconic anhydride, glutaconic anhydride, itaconic anhydride, diglycolic anhydride, cyclohexanedicarboxylic anhydride, cyclopentanetetracarboxylic dianhydride, and phenyl succinic anhydride; sulfur-containing compounds such as ethylene sulfite, 1,3-propane sultone, 1,4-butane sultone, methyl methane sulfonate, busulfan, sulfolane, sulfolene, dimethylsulfone, and tetramethylthiuram monosulfide; nitrogen-containing compounds such as 1-methyl-2-pyrrolidinone, 1-methyl-2-piperidone, 3-methyl-2-oxazolidinone, 1,3-dimethyl-2-imidazolidinone, and N-methylsuccinimide; and hydrocarbon compounds such as heptane, octane, cycloheptane, and fluorobenzene. The nonaqueous solvent containing 0.1 to 5% by weight of any of these compounds improves the capacity retention and cycling characteristics after storage at high temperatures.

Examples of the overcharge inhibitors include: aromatic compounds such as cyclohexyl benzene, biphenyl, alkylbiphenyl, terphenyl, partially hydrogenated terphenyl, t-butyl benzene, t-amyl benzene, diphenyl ether, benzofuran, and dibenzofuran; partial fluorides of the aromatic compounds, such as 2-fluorobiphenyl; and fluorinated anisole compounds such as 2,4-difluoroanisole, 2,5-difluoroanisole, and 2,6-difluoroanisole. A nonaqueous solvent containing 0.1 to 5% by weight of any of these overcharge inhibitors can suppress bursting and/or firing of overcharged cells.

Any electrolyte salt may be used in the present invention. Preferably, a lithium salt is used. Examples of the lithium salt include: inorganic lithium salts such as $LiClO_4$, $LiPF_6$, and $LiBF_4$; and fluorinated organic acid lithium salts such as $LiCF_3SO_3$, $LiN(CF_3SO_2)_2$, $LiN(C_2F_5SO_2)_2$, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(CF_3SO_2)_2$, and $LiBF_2(C_2F_5SO_2)_2$. Each of these may be used alone, or two or more of these may be used in combination. Among these, $LiPF_6$, $LiBF_4$, $LiCF_3SO_3$, $LiN(CF_3SO_2)_2$, and $LiN(C_2F_5SO_2)_2$ are preferable, and $LiPF_6$ and $LiBF_4$ are more preferable. Moreover, use of an inorganic lithium salt such as $LiPF_6$ and $LiBF_4$ and a fluorinated organic lithium salt such as $LiCF_3SO_3$, $LiN(CF_3SO_2)_2$, and $LiN(C_2F_5SO_2)_2$ in combination is preferable because it reduces degradation after storage at high temperatures.

The concentration of the electrolyte salt in the nonaqueous electrolyte solution of the present invention is preferably 0.5 to 3 mol/L. The concentration outside the range tends to lower the electric conductivity of the electrolyte solution to lower the cell performance.

As described above, in the nonaqueous electrolyte solution of the present invention, the amount of a specific compound is reduced to a certain value or less. An electrochemical device including such nonaqueous electrolyte solution of the present invention is therefore excellent in high temperature storage characteristics and cycling characteristics at high voltages. The electrochemical device including such nonaqueous electrolyte solution is another aspect of the present invention.

Examples of the electrochemical device provided with the nonaqueous electrolyte solution of the present invention include lithium ion secondary cells and electrical double layer capacitors. Hereinafter, the configuration of a

lithium ion secondary cell is described.

A lithium ion secondary cell including a negative electrode, a positive electrode, and the nonaqueous electrolyte solution of the present invention is still another aspect of the present invention.

Materials of the negative electrode included in the lithium ion secondary cell may be: carbonaceous materials which can occlude and discharge lithium, such as pyrolysates of organic matters produced under various pyrolysis conditions, artificial graphite, and natural graphite; metal oxide materials which can occlude and discharge lithium, such as tin oxide and silicon oxide; lithium metals; or various lithium alloys. Two or more of these negative electrode materials may be used in combination.

The carbonaceous materials which can occlude and discharge lithium are preferably artificial graphite or purified natural graphite prepared by high temperature treatment of a graphitizable pitch obtained from various starting materials, or materials obtained from these graphites by performing a surface treatment on the graphites using a pitch or other organic matters and carbonizing the surface-treated graphites.

The negative electrode may be produced by a common method. For example, a negative electrode material is mixed with a binding agent, a thickener, a conductive material, a solvent and the like into slurry. The slurry is applied to a collector and densified by pressing after drying.

Any binding agent may be used, as long as it is safe for the solvent or electrolyte solution used in production of electrodes. Examples thereof include polyvinylidene fluoride, polytetrafluoroethylene, polyethylene, polypropylene, styrene/butadiene rubber, isoprene rubber, butadiene rubber, ethylene-acrylic acid copolymers, and ethylene-methacrylic acid copolymers.

Examples of the thickener include carboxy methyl cellulose, methyl cellulose, hydroxy methyl cellulose, ethyl cellulose, polyvinyl alcohol, oxidized starch, phosphorylated starch, and casein.

Examples of the conductive material include: metal materials such as copper and nickel; and carbon materials such as graphite and carbon black.

Examples of the material of the collector for the negative electrode include copper, nickel, and stainless steel. Among these, copper is preferable because it is easily formed into a thin film and is cost effective.

Materials of the positive electrode included in the lithium ion secondary cell are particularly preferably positive electrode active materials of lithium-containing transition metal complex oxides which produce high voltages. Preferable examples thereof include lithium/manganese spinel complex oxides represented by Formula (a): $Li_aMn_{2-b}M^1_bO_4$ ($0.9 \leq a$; $0 \leq b \leq 1.5$; $M^1$ being at least one metal selected from the group consisting of Fe, Co, Ni, Cu, Zn, Al, Sn, Cr, V, Ti, Mg, Ca, Sr, B, Ga, In, Si, and Ge), lithium/nickel complex oxides represented by Formula (b): $LiNi_{1-c}M^2_cO_2$ ($0 \leq c \leq 0.5$; $M^2$ being at least one metal selected from the group consisting of Fe, Co, Mn, Cu, Zn, Al, Sn, Cr, V, Ti, Mg, Ca, Sr, B, Ga, In, Si, and Ge), and lithium/cobalt complex oxides represented by Formula: $LiCo_{1-d}M^3_dO_2$ ($0 \leq d \leq 0.5$; $M^3$ being at least one metal selected from the group consisting of Fe, Ni, Mn, Cu, Zn, Al, Sn, Cr, V, Ti, Mg, Ca, Sr, B, Ga, In, Si, and Ge).

Specifically, preferable examples thereof include $LiCoO_2$, $LiMnO_2$, $LiNiO_2$, $LiMn_2O_4$, $LiNi_{0.8}Co_{0.15}Al_{0.05}O_2$, and $LiNi_{1/3}Co_{1/3}Mn_{1/3}O_2$ because high-power lithium ion secondary cells with high energy density can be produced.

In addition, positive electrode active materials, such as $LiFePO_4$, $LiNi_{0.8}Co_{0.2}O_2$, $Li_{1.2}Fe_{0.4}Mn_{0.4}O_2$, $LiNi_{0.5}Mn_{0.5}O_2$, and $LiV_3O_6$, may also be used.

The amount of the positive electrode active material is preferably 50 to 99% by mass and more preferably 80 to 99% by mass of the positive electrode composition because the cell capacity is high when the amount is within the above range.

In the present invention, preferably, the positive electrode active material includes mainly secondary particles with an average particle size of not more than 40 $\mu$m and 0.5 to 7.0% by volume of fine particles with an average primary particle size of not more than 1 $\mu$m, especially in the case of being used in a large lithium ion secondary cell for a hybrid vehicle or a dispersed power source because such a cell is required to be a high-power cell. The positive electrode active material containing fine particles with an average primary particle size of not more than 1 $\mu$m has a larger area in contact with the electrolyte solution to promote diffusion of lithium ions between the electrode and the electrolyte solution, leading to improvement in output performance.

The positive electrode may be produced by a common method. For example, a positive electrode material is mixed with a binding agent, a thickener, a conductive material, a solvent, and the like into slurry. The slurry is applied to a collector and densified by pressing after drying.

A binding agent for the positive electrode may be the same as that for the negative electrode, and may be any binding agent as long as it is safe for the solvent and the electrolyte solution used in production of the electrode. Examples thereof include polyvinylidene fluoride, polytetrafluoroethylene, polyethylene, polypropylene, styrene/butadiene rubber, isoprene rubber, butadiene rubber, ethylene-acrylic acid copolymers, and ethylene-methacrylic acid copolymers.

A thickener for the positive electrode may be the same as that for the negative electrode, and examples thereof include carboxy methyl cellulose, methyl cellulose, hydroxy methyl cellulose, ethyl cellulose, polyvinyl alcohol, oxidized starch, phosphorylated starch, and casein.

Examples of the conductive material include carbon materials such as graphite and carbon black.

Examples of the material of the collector for the positive electrode include metals such as aluminum, titanium, and tantalum, and alloys of these. Among these, aluminum or its alloy is preferable.

The material and shape of a separator used in the lithium ion secondary cell may be arbitrarily determined, as long as the separator is stable to the nonaqueous electrolyte solution and has excellent liquid holding property. Preferable are porous sheets or nonwoven fabrics made from polyolefin such as polyethylene and polypropylene. Specific examples thereof include a microporous polyethylene film, a microporous polypropylene film, a microporous ethylene-propylene copolymer film, a microporous polypropylene/polyethylene bilayer film, and a microporous polypropylene/polyethylene/polypropylene trilayer film.

The cell may be of any shape, and exemplary types include cylindrical, square, laminated, coin, and large types. The shapes and configurations of the positive electrode, negative electrode, and separator may be modified in accordance with the type of the cell.

As described above, the use of the nonaqueous electrolyte solution of the present invention enables production of a lithium ion secondary cell and the like excellent in high temperature storage characteristics and cycling characteristics at high voltages.

The present invention also provides a module provided with a lithium ion secondary cell including the nonaqueous electrolyte solution of the present invention.

## EXAMPLES

In the following, the present invention is more specifically described with reference to examples and comparative examples. The present invention is not limited to these examples.

Synthesis 1: How to synthesize $CF_3CH_2OCO_2CH_3$

A reactor including a four-neck flask (10 L) equipped with a reflux condenser and an dropping funnel was prepared. In an ice bath, $CF_3CH_2OH$ (750 g; 7.5 mol), methyl chloroformate (708.8 g; 7.5 mol), and a solvent that was diglyme (700 mL) were stirred in the reactor. Then, triethylamine (758.3 g; 7.5 mol) was added thereto through the dropping funnel with attention to avoid the batch getting warm. Triethylamine hydrochloride was gradually deposited and the color of the reaction solution was turned into milky white.

After the reaction, the reaction solution was washed with a 1 N HCl aqueous solution.

After washing, a separated organic layer was rectified using a distillation column with 10 plates. The first drops, which are about 5% of the distillate, were disposed, and following drops were sampled in approximately the same amounts in the distillation order, thereby preparing rectified solutions A, B, and C which were different in the $CF_3CH_2OH$ (compound (I-1)), $CH_3OH$ (compound (II-1)), and $CH_3OCOCl$ (compound (III-1)) contents.

The rectified solutions A to C were subjected to gas chromatography (GC-17A from Shimadzu Corporation, Column: DB624 (Length 60 m, I.D 0.32 mm, Film 1.8 μm), temperature rise from 50°C to 250°C at a rate of 10°C/min, injection and detector (FID) both at 250°C). Thus, the purity of $CF_3CH_2OCO_2CH_3$ and the amounts of compounds (I-1), (II-1), and (III-1) relative to the amount of $CF_3CH_2OCO_2CH_3$ were obtained. Table 1 shows the results.

[Table 1]

| | Purity (%) | Amount (ppm) | | | Total amount of Compounds (I) to (III) (ppm) |
|---|---|---|---|---|---|
| | | Compound (I-1) | Compound (II-1) | Compound (III-1) | |
| Rectified solution A | 99.05 | 4000 | 1500 | 2700 | 8200 |
| Rectified solution B | 99.45 | 2900 | 600 | 1400 | 4900 |
| Rectified solution C | 99.68 | 1500 | 200 | 600 | 2300 |

Synthesis 2: How to synthesize $CF_3CH_2OCO_2C_2H_5$

A reactor including a four-neck flask (10 L) equipped with a reflux condenser and an dropping funnel was prepared. In an ice bath, $CF_3CH_2OH$ (750 g; 7.5 mol), ethyl chloroformate (813.3 g; 7.5 mol), and a solvent that was diglyme (1250 mL) were stirred in the reactor. Then, triethylamine (758.3 g; 7.5 mol) was added thereto through the dropping funnel with attention to avoid the batch getting warm. Triethylamine hydrochloride was gradually deposited and the color of the reaction solution was turned into milky white. After the reaction, the reaction solution was washed with a 1 N HCl aqueous solution.

After washing, a separated organic layer was rectified using a distillation column with 10 plates. The first drops, which are about 5% of the distillate, were disposed, and following drops were sampled in approximately the same amounts in the distillation order, thereby preparing rectified solutions D, E, and F which were different in the $CF_3CH_2OH$ (compound (I-1)), $C_2H_5OH$(compound (II-2)), and $C_2H_5OCOCl$ (compound (III-2)) contents.

The rectified solutions D to F were subjected to gas chromatography (GC-17A from Shimadzu Corporation, Column: DB624 (Length 60 m, I.D 0.32 mm, Film 1.8 μm), temperature rise from 50°C to 250°C at a rate of 10°C/min, injection and detector (FID) both at 250°C). Thus, the purity of $CF_3CH_2OCO_2C_2H_5$, and the amounts of compounds (1-1), (II-2), and (III-2) relative to the amount of $CF_3CH_2OCO_2C_2H_5$ were obtained. Table 2 shows the results.

[Table 2]

| | Purity (%) | Amount (ppm) | | | Total amount of Compounds (I) to (III) (ppm) |
|---|---|---|---|---|---|
| | | Compound (I-1) | Compound (II-2) | Compound (III-2) | |
| Rectified solution D | 99.02 | 2200 | 2700 | 4200 | 9100 |
| Rectified solution E | 99.49 | 550 | 850 | 3200 | 4600 |
| Rectified solution F | 99.70 | 200 | 100 | 2100 | 2400 |

Synthesis 3: How to synthesize $CF_3CH_2OCO_2CH_3$

A reactor including a four-neck flask (10 L) equipped with a reflux condenser and an dropping funnel was prepared. In an ice bath, $CF_3CH_2OH$ (750 g; 7.5 mol), methyl chloroformate (708.8 g; 7.5 mol), and a solvent that was diglyme (700 mL) were stirred in the reactor. Then, triethylamine (758.3 g; 7.5 mol) was added thereto through the dropping funnel with attention to avoid the batch getting warm. Triethylamine hydrochloride was gradually deposited and the color of the reaction solution was turned into milky white.

After the reaction, the reaction solution was washed with a 1 N HCl aqueous solution.

After washing, a separated organic layer was rectified using a distillation column with 10 plates. The rectification was performed using a vacuum pump under reduced pressure (0.03 MPa) at an outside temperature of 110°C. The first drops, which are about 5% of the distillate, were disposed, and following drops were sampled in approximately the same amounts in the distillation order, thereby preparing rectified solutions G, H, I, J, K, L, and M which were different in the $CF_3CH_2OH$ (compound (I-1)), $CH_3OH$ (compound (II-1)), and $CH_3OCOCl$ (compound (III-1)) contents.

The rectified solutions G to M were subjected to gas chromatography (GC-17A from Shimadzu Corporation, Column: DB624 (Length 60 m, I.D 0.32 mm, Film 1.8 μm), temperature rise from 50°C to 250°C at a rate of 10°C /min, injection and detector (FID) both at 250°C). Thus, the purity of $CF_3CH_2OCO_2CH_3$, and the amounts of compounds (I-1), (II-1), and (III-1) relative to the amount of $CF_3CH_2OCO_2CH_3$ were obtained. Table 3 shows the results.

[Table 3]

| | Purity (%) | Amount (ppm) | | | Total amount of Compounds (I) to (III) (ppm) |
|---|---|---|---|---|---|
| | | Compound (I-1) | Compound (II-1) | Compound (III-1) | |
| Rectified solution G | 99.32 | 2100 | 2300 | 4500 | 8900 |
| Rectified solution H | 99.41 | 900 | 600 | 4000 | 5500 |
| Rectified solution I | 99.62 | 500 | 400 | 3400 | 4200 |
| Rectified solution J | 99.74 | 400 | 300 | 1700 | 2400 |
| Rectified solution K | 99.79 | 300 | 100 | 1600 | 2000 |
| Rectified solution L | 99.99 | 30 | 10 | 5 | 45 |
| Rectified solution M | 99.99 | 5 | 1 | 3 | 9 |

Example 1

Under dry argon atmosphere, 3 parts by weight of $CF_3CH_2OCO_2CH_3$ of the rectified solution C was added to 97 parts by weight of a mixture containing ethylene carbonate that contains 20 ppm of $HOCH_2CH_2OH$ and ethyl methyl carbonate (volume ratio of 3:7), and then, sufficiently dry $LiPF_6$ was dissolved therein such that the proportion of the $LiPF_6$ becomes 1 mol/L. Thus, an electrolyte solution was prepared.

(Production of coin cell)

A positive electrode active material containing $LiNi_{1/3}Mn_{1/3}Co_{1/3}O_2$, carbon black, and polyvinylidene fluoride (KF-7200 (trade name) from KUREHA CORPORATION) at a ratio of 92/3/5 (% by mass) was dispersed in N-methyl-2-pyrrolidone, thereby preparing a positive electrode composition slurry. The resulting positive electrode composition slurry was uniformly applied onto an aluminum collector, and dried to form a positive electrode composition layer (50 $\mu$m in thickness). Then, the collector with the layer was compression-molded using a roller press, thereby producing a positive electrode laminate. From the positive electrode laminate, a portion with a diameter of 1.6 mm was punched using a punching machine. Thus, a circular positive electrode was produced.

Separately, styrene-butadiene rubber dispersed in distilled water was added to artificial graphite powder such that the amount of the rubber becomes 6% by mass in solids. The resulting mixture was mixed with a disperser to give slurry. The slurry was uniformly applied onto a negative electrode collector (10 $\mu$m-thick copper foil) and dried to form a negative electrode component layer. Then, the collector with the layer was compression-molded using a roller press, and a portion with a diameter of 1.6 mm was punched therefrom using a punching machine. Thus, a circular negative electrode was produced.

The positive electrode and the negative electrode were set to face each other with a microporous polyethylene film (separator) having a thickness of 20 $\mu$m interposed therebetween, and an electrolyte solution was injected to that layered product. After the electrolyte solution sufficiently infiltrated the separator and the like, the layered product was encapsulated, pre-charged, and aged. Thus, a coin-type lithium ion secondary cell was produced.

(Measurement of cell characteristics)

The cycling characteristics at high voltages and high temperature storage characteristics of the coin-type lithium

ion secondary cell were measured in the following procedure.

Charge and discharge conditions

Charge: charged at 0.5 C and 4.3 V until the charge current reached 1/10 C (CC-CV charge)
Discharge: at 0.5 C and cut at 3.0 V (CC discharge)

(Cycling characteristics)

How to measure the cycling characteristics is described below. A charge/discharge cycle under the above conditions (charged at 1.0 C and a predetermined voltage until the charge current reached 1/10 C, and discharged at a current corresponding to 1 C until the voltage reached 3.0 V) is regarded as 1 cycle. The discharge capacity was measured after 5 cycles and 100 cycles. With regard to the cycling characteristics, the value calculated by the following equation is regarded as the value showing capacity retention factor. Table 4 shows the results.

$$\text{Capacity retention factor}(\%) = \frac{\text{Discharge capacity after 100 cycles (mAh)}}{\text{Discharge capacity after 5 cycles (mAh)}} \times 100$$

(High temperature storage characteristics)

The high temperature storage characteristics were determined as follows. The cell was charged and discharged under the above conditions (charged at 1.0 C and a predetermined voltage until the charge current reached 1/10 C, and discharged at a current corresponding to 1 C until the voltage reached 3.0 V), and the discharge capacity was measured. Then, the cell was charged again under the above charge condition, and stored in an isothermal chamber at 85°C for a day. The cell after storage was placed at a temperature of 25°C and was discharged under the above discharge condition to the discharge cut-off voltage of 3 V. Then, the residual capacity was measured. The cell was further charged under the above charge condition and discharged at a constant current under the discharge condition to the discharge cut-off voltage of 3 V. Then, the recovery capacity was measured. Table 4 shows the recovery capacity based on the discharge capacity before storage set to 100.

Example 2

A cell was produced and tested in the same manner as in Example 1, except that $CF_3CH_2OCO_2CH_3$ of the rectified solution C was changed to $CF_3CH_2OCO_2CH_3$ of the rectified solution B. Table 4 shows the results.

Example 3

A cell was produced and tested in the same manner as in Example 1, except that $CF_3CH_2OCO_2CH_3$ of the rectified solution C was changed to $CF_3CH_2OCO_2C_2H_5$ of the rectified solution F. Table 4 shows the results.

Example 4

A cell was produced and tested in the same manner as in Example 1, except that $CF_3CH_2OCO_2CH_3$ of the rectified solution C was changed to $CF_3CH_2OCO_2C_2H_5$ of the rectified solution E. Table 4 shows the results.

Example 5

A cell was produced and tested in the same manner as in Example 1, except that $CF_3CH_2OCO_2CH_3$ of the rectified solution C was changed to $CF_3CH_2OCO_2CH_3$ of the rectified solution I. Table 4 shows the results.

Example 6

A cell was produced and tested in the same manner as in Example 1, except that $CF_3CH_2OCO_2CH_3$ of the rectified solution C was changed to $CF_3CH_2OCO_2CH_3$ of the rectified solution J. Table 4 shows the results.

Example 7

A cell was produced and tested in the same manner as in Example 1, except that $CF_3CH_2OCO_2CH_3$ of the rectified solution C was changed to $CF_3CH_2OCO_2CH_3$ of the rectified solution K. Table 4 shows the results.

Example 8

A cell was produced and tested in the same manner as in Example 1, except that $CF_3CH_2OCO_2CH_3$ of the rectified solution C was changed to $CF_3CH_2OCO_2CH_3$ of the rectified solution L. Table 4 shows the results.

Example 9

A cell was produced and tested in the same manner as in Example 1, except that $CF_3CH_2OCO_2CH_3$ of the rectified solution C was changed to $CF_3CH_2OCO_2CH_3$ of the rectified solution M. Table 4 shows the results.

Comparative Example 1

A cell was produced and tested in the same manner as in Example 1, except that $CF_3CH_2OCO_2CH_3$ of the rectified solution C was changed to $CF_3CH_2OCO_2CH_3$ of the rectified solution A. Table 4 shows the results.

Comparative Example 2

A cell was produced and tested in the same manner as in Example 1, except that $CF_3CH_2OCO_2CH_3$ of the rectified solution C was changed to a compound containing $CF_3CH_2OCO_2CH_3$ of the rectified solution C and the compound (I-1) in an amount of 10000 ppm relative to the amount of the rectified solution C. Table 4 shows the results.

Comparative Example 3

A cell was produced and tested in the same manner as in Example 1, except that $CF_3CH_2OCO_2CH_3$ of the rectified solution C was changed to a compound containing $CF_3CH_2OCO_2CH_3$ of the rectified solution C and the compound (II-1) in an amount of 10000 ppm relative to the amount of the rectified solution C. Table 4 shows the results.

Comparative Example 4

A cell was produced and tested in the same manner as in Example 1, except that $CF_3CH_2OCO_2CH_3$ of the rectified solution C was changed to a compound containing $CF_3CH_2OCO_2CH_3$ of the rectified solution C and the compound (III-1) in an amount of 10000 ppm relative to the amount of the rectified solution C. Table 4 shows the results.

Comparative Example 5

A cell was produced and tested in the same manner as in Example 1, except that $CF_3CH_2OCO_2CH_3$ of the rectified solution C was changed to $CF_3CH_2OCO_2C_2H_5$ of the rectified solution D. Table 4 shows the results.

Comparative Example 6

A cell was produced and tested in the same manner as in Example 1, except that $CF_3CH_2OCO_2CH_3$ of the rectified solution C was changed to $CF_3CH_2OCO_2C_2H_5$ of the rectified solution G. Table 4 shows the results.

Comparative Example 7

A cell was produced and tested in the same manner as in Example 1, except that $CF_3CH_2OCO_2CH_3$ of the rectified solution C was changed to $CF_3CH_2OCO_2C_2H_5$ of the rectified solution H. Table 4 shows the results.

Comparative Example 8

A cell was produced and tested in the same manner as in Example 1, except that $CF_3CH_2OCO_2CH_3$ of the rectified solution C was changed to a compound containing $CF_3CH_2OCO_2C_2H_5$ of the rectified solution F and the compound (I-1) in an amount of 10000 ppm relative to the amount of the rectified solution F. Table 4 shows the results.

Comparative Example 9

A cell was produced and tested in the same manner as in Example 1, except that $CF_3CH_2OCO_2CH_3$ of the rectified solution C was changed to a compound containing $CF_3CH_2OCO_2C_2H_5$ of the rectified solution F and the compound (II-2) in an amount of 10000 ppm relative to the amount of the rectified solution F. Table 4 shows the results.

Comparative Example 10

A cell was produced and tested in the same manner as in Example 1, except that $CF_3CH_2OCO_2CH_3$ of the rectified solution C was changed to a compound containing $CF_3CH_2OCO_2C_2H_5$ of the rectified solution F and the compound (III-2) in an amount of 10000 ppm relative to the amount of the rectified solution F.

[Table 4]

| | High voltage cycle test | High temperature storage test |
|---|---|---|
| | Capacity retention factor (%) | Recovery capacity (%) |
| Example 1 | 96.8 | 93.0 |
| Example 2 | 95.7 | 91.2 |
| Example 3 | 95.5 | 91.8 |
| Example 4 | 94.8 | 90.3 |
| Example 5 | 94.3 | 91.2 |
| Example 6 | 97.3 | 94.0 |
| Example 7 | 97.5 | 94.2 |
| Example 8 | 97.7 | 94.4 |
| Example 9 | 98.1 | 94.7 |
| Comparative Example 1 | 87.7 | 82.3 |
| Comparative Example 2 | 86.9 | 80.9 |
| Comparative Example 3 | 83.9 | 77.6 |
| Comparative Example 4 | 81.5 | 74.3 |
| Comparative Example 5 | 86.8 | 81.5 |
| Comparative Example 6 | 87.2 | 81.2 |
| Comparative Example 7 | 91.3 | 87.8 |
| Comparative Example 8 | 85.8 | 79.8 |
| Comparative Example 9 | 82.5 | 76.8 |
| Comparative Example 10 | 80.8 | 72.9 |

Example 10

An electrolyte solution to be used was prepared by blending 97 parts by weight of a mixture of propylene carbonate containing $HOCHCH_3CH_2OH$ (20 ppm), ethylene carbonate containing $HOCH_2CH_2OH$ (10 ppm), and ethyl methyl carbonate (volume ratio of 1:2:7) with 3 parts by weight of the rectified solution C of $HCF_2CF_2CH_2OCF_2CF_2H$ under dry argon atmosphere and dissolving sufficiently dry $LiPF_6$ in the resulting mixture such that the proportion of the $LiPF_6$ becomes 1 mol/L. A cell was produced and tested in the same manner as in Example 1. Table 5 shows the results.

Example 11

An electrolyte solution to be used was prepared by blending 97 parts by weight of a mixture of fluoroethylene carbonate containing $HOCHFCH_2OH$ (10 ppm), ethylene carbonate containing $HOCH_2CH_2OH$ (10 ppm) and ethyl methyl carbonate (volume ratio of 1:2:7) with 3 parts by weight of the rectified solution C of $HCF_2CF_2CH_2OCF_2CF_2H$ under dry

argon atmosphere and dissolving sufficiently dry $LiPF_6$ in the resulting mixture such that the proportion of the $LiPF_6$ becomes 1 mol/L. A cell was produced and tested in the same manner as in Example 1. Table 5 shows the results.

Comparative Example 11

An electrolyte solution to be used was prepared by blending 97 parts by weight of a mixture of ethylene carbonate containing $HOCH_2CH_2OH$ (70 ppm) and ethyl methyl carbonate (volume ratio of 3:7) with 3 parts by weight of the rectified solution C of $CF_3CH_2OCO_2CH_3$ under dry argon atmosphere and dissolving sufficiently dry $LiPF_6$ in the resulting mixture such that the proportion of the $LiPF_6$ becomes 1 mol/L. A cell was produced and tested in the same manner as in Example 1. Table 5 shows the results.

Comparative Example 12

An electrolyte solution was prepared in the same manner as in Example 10, except that propylene carbonate containing $HOCHCH_3CH_2OH$ (20 ppm) was changed to propylene carbonate containing $HOCHCH_3CH_2OH$ (50 ppm). A cell was then produced and tested in the same manner as in Example 10. Table 5 shows the results.

Comparative Example 13

A cell was produced and tested in the same manner as in Example 11, except that fluoroethylene carbonate containing $HOCHFCH_2OH$ (10 ppm) was changed to fluoroethylene carbonate containing $HOCHFCH_2OH$ (50 ppm). Table 5 shows the results.

[Table 5]

| | High voltage cycle test | High temperature storage test |
|---|---|---|
| | Capacity retention factor (%) | Recovery capacity (%) |
| Example 10 | 93.6 | 89.2 |
| Example 11 | 97.1 | 93.5 |
| Comparative Example 11 | 95.3 | 91.0 |
| Comparative Example 12 | 92.8 | 87.2 |
| Comparative Example 13 | 95.6 | 90.3 |

- Industrial Applicability

The nonaqueous electrolyte solution of the present invention is suitably used for electric devices such as lithium ion secondary cells.

## Claims

**1.** A nonaqueous electrolyte solution comprising:

a nonaqueous solvent; and
an electrolyte salt;
wherein the nonaqueous solvent contains
a fluorinated linear carbonate (A) represented by Formula (1):

RfOCOOR (1)

where Rf represents a C1-4 fluorinated alkyl group and R represents a C1-4 alkyl group, and
at least one cyclic carbonate (B) selected from the group consisting of ethylene carbonate, propylene carbonate, and fluoroethylene carbonate, and
the nonaqueous solvent also contains
at least one compound ($\alpha$) selected from the group consisting of

(I) a compound represented by Formula (2):

$$RfOH \qquad (2)$$

where Rf is defined as above,
(II) a compound represented by Formula (3):

$$ROH \qquad (3)$$

where R is defined as above, and
(III) a compound represented by Formula (4):

$$ROCOCl \qquad (4)$$

where R is defined as above, and

at least one compound (β) selected from the group consisting of

(IV) a compound represented by Formula (5):

$$HO\ (CH_2CH_2)_nOH \qquad (5)$$

where n is an integer of 1 to 5,
(V) a compound represented by Formula (6):

$$HO\ (CHCH_3CH_2)_nOH \qquad (6)$$

where n is an integer of 1 to 5, and
(VI) a compound represented by Formula (7):

$$HO\ (CHFCH_2)_nOH \qquad (7)$$

where n is an integer of 1 to 5,

the compound (α) being contained in an amount of 5000 ppm or less based on the amount of the fluorinated linear carbonate (A),
the compound (β) being contained in an amount of 50 ppm or less based on the amount of the cyclic carbonate (B).

**2.** The nonaqueous electrolyte solution according to claim 1,
wherein the fluorinated linear carbonate (A) is $CF_3CH_2OCOOCH_3$ or $CF_3CH_2OCOOCH_2CH_3$.

**3.** The nonaqueous electrolyte solution according to claim 1 or 2,
wherein the amount of the fluorinated linear carbonate (A) is 0.5 to 90% by weight in the nonaqueous solvent.

**4.** The nonaqueous electrolyte solution according to claim 1, 2, or 3,
wherein the cyclic carbonate (B) is ethylene carbonate and the compound (β) is the compound represented by Formula (5).

**5.** The nonaqueous electrolyte solution according to claim 1, 2, 3, or 4,
wherein the cyclic carbonate (B) is propylene carbonate and the compound (β) is the compound represented by Formula (6).

**6.** The nonaqueous electrolyte solution according to claim 1, 2, 3, 4, or 5,
wherein the cyclic carbonate (B) is fluoroethylene carbonate and the compound (β) is the compound represented by Formula (7).

**7.** An electrochemical device comprising
the nonaqueous electrolyte solution according to claim 1, 2, 3, 4, 5, or 6.

**8.** A lithium ion secondary cell comprising:

a positive electrode;
a negative electrode; and
the nonaqueous electrolyte solution according to claim 1, 2, 3, 4, 5, or 6.

**9.** A module comprising the lithium ion secondary cell according to claim 8.

**INTERNATIONAL SEARCH REPORT**

International application No. PCT/JP2013/075884

A. CLASSIFICATION OF SUBJECT MATTER
*H01M10/0569*(2010.01)i, *H01G9/035*(2006.01)i, *H01M10/052*(2010.01)i, *H01M10/0567*(2010.01)i

According to International Patent Classification (IPC) or to both national classification and IPC

B. FIELDS SEARCHED

Minimum documentation searched (classification system followed by classification symbols)
H01M10/0569, H01G9/035, H01M10/052, H01M10/0567

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2006/132372 A1 (Mitsubishi Chemical Corp.), 14 December 2006 (14.12.2006), paragraphs [0090], [0293] to [0316], [0340] to [0359]<br>& JP 2007-15931 A & JP 2007-19010 A<br>& JP 2007-19011 A & JP 2007-19012 A<br>& US 2009/0253048 A1 & EP 1890357 A1<br>& EP 2339684 A2 & EP 2485314 A1<br>& CN 101218706 A & KR 10-2010-0076030 A<br>& KR 10-2008-0009230 A & KR 10-0977431 B1 | 1-9 |
| Y | JP 2006-210816 A (Tokuyama Corp.), 10 August 2006 (10.08.2006), entire text<br>(Family: none) | 1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>22 November, 2013 (22.11.13) | Date of mailing of the international search report<br>03 December, 2013 (03.12.13) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2013/075884

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-75440 A (Ube Industries, Ltd.), 15 March 2002 (15.03.2002), entire text (Family: none) | 1-9 |
| Y | JP 2007-294433 A (Sanyo Electric Co., Ltd., Mitsui Chemicals, Inc.), 08 November 2007 (08.11.2007), entire text (Family: none) | 2 |
| P,X | WO 2012/133798 A1 (Daikin Industries, Ltd.), 04 October 2012 (04.10.2012), entire text & JP 2012-216544 A & TW 201246655 A | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11195429 A